# EUROPEAN PATENT SPECIFICATION

(11) **EP 4 324 875 B1**
(45) Date of publication and mention of the grant of the patent: **27.08.2025**
(21) Application number: 22788227.1
(22) Date of filing: 18.04.2022
(51) Int. Cl.: C08K 7/02, C08L 101/00, C08J 5/04, C08K 3/016, H01M 50/202, H01M 50/204, H01M 50/249, C08J 5/10, H01M 50/121, H01M 50/131, H01M 50/222, H01M 50/227, H01M 50/229, H01M 50/24, H01M 50/293

(54) **BATTERY HOUSING**
BATTERIEGEHÄUSE
BOÎTIER DE BATTERIE

(30) Priority: 16.04.2021 JP 2021069978
(43) Date of publication of application: 21.02.2024
(73) Proprietor: MAFTEC Co., Ltd., Tokyo 100-0005 (JP)
(72) Inventor: YANO, Akihiro, Tokyo 100-8251 (JP); SHIRAKU, Hideyuki, Tokyo 100-8251 (JP); KAWAHARA, Kazunori, Tokyo 100-8251 (JP); TAKATA, Nobuaki, Tokyo 100-8251 (JP)
(74) Representative: Vossius & Partner Patentanwälte Rechtsanwälte mbB
(86) International application number: PCT/JP2022/018081
(87) International publication number: WO 2022/220304

(56) References cited:
- DE-A1- 102017 219 240
- JP-A- 2007 533 106
- JP-A- 2020 536 141
- KR-A- 20090 024 410
- US-A1- 2020 243 820

## Description

### Technical Field

The present invention relates to a battery housing.

### Background Art

Weight reduction has become an issue in order to improve energy efficiency for transportation machinery using motors in general. Focusing on the battery housing, conventionally metal materials have been used, and there has been a problem of heavy weight. Aluminum is an example of a lightweight metal; however, because it has a low melting point, it is easily penetrated by a flame generated when thermal runaway of the battery occurs. Oxygen is supplied through the penetrated through hole, causing explosive combustion, making aluminum unsuitable for use.

Another considerable example of the lightweight material is resin; however, it is difficult to use because it has insufficient flame shielding performance and rigidity for use as a battery housing.

In response to the above problems, for example, PTL 1 has proposed a battery case for vehicles, which is formed by molding a carbon fiber-reinforced polypropylene resin composition obtained by blending 8 to 70 parts by weight of a carbon fiber and 0.6 to 37.5 parts by weight of a flame retardant with respect to 100 parts by weight of a polypropylene resin, where the carbon fiber in the molded article has a weight average fiber length of 0.5 mm or more and less than 3 mm. PTL2 relates to battery housings made of fiber-reinforced resins which contain a combination of metallic fibers and non-metallic fibers.

### Citation List

### Patent Literature

PTL 1: JP 2014-62189 A
PTL 2: DE102017219240A1

### Summary of Invention

### Technical Problem

The energy density of a battery module tends to increase in order to extend driving distance of electric vehicles. Therefore, a battery housing made of a reinforced resin is also required to have higher flame shielding performance.

Under such circumstances, an object of the present invention is to provide a battery housing made of a fiber-reinforced resin capable of delaying the spread of fire to an automobile interior member when thermal runaway of a battery occurs and flame is generated, and having excellent flame shielding performance.

### Solution to Problem

In order to solve the above problems, the present inventors have made extensive studies and found that the above problems can be solved by a battery housing using a fiber-reinforced resin containing at least an inorganic fiber having a melting temperature or a burn-out temperature of higher than 1000°C in an air atmosphere, and based on these findings, have completed the present invention.

That is, the present invention provides the following [1] to [12].
[1] A battery housing made of a fiber-reinforced resin, containing, as the fiber, a highly heat-resistant fiber A having a melting temperature or a burn-out temperature of higher than 1000°C in an air atmosphere, and an inorganic fiber B having a melting temperature or a burn-out temperature lower than that of the highly heat-resistant fiber A, wherein a mass ratio of the inorganic fiber B to the highly heat-resistant fiber A (B/A) is in a range of more than 1 to 8.
[2] The battery housing according to the above [1], wherein the mass ratio of the inorganic fiber B to the highly heat-resistant fiber A (B/A) is in a range of 2 to 6.
[3] The battery housing according to the above [1] or [2], wherein the highly heat-resistant fiber A has an average fiber diameter of 3 to 25 µm and an average fiber length of 5 mm or more.
[4] The battery housing according to any one of the above [1] to [3], wherein the inorganic fiber B has an average fiber length greater than the average fiber length of the highly heat-resistant fiber A.
[5] The battery housing according to any one of the above [1] to [4], wherein the highly heat-resistant fiber A has a content of 1 part by mass or more with respect to 100 parts by mass of the fiber-reinforced resin.
[6] The battery housing according to any one of the above [1] to [5], wherein the inorganic fiber B contains a glass fiber.
[7] The battery housing according to any one of the above [1] to [6], wherein the highly heat-resistant fiber A is an alumina fiber.
[8] The battery housing according to any one of the above [1] to [7], which is formed by shape forming a stampable sheet made of the fiber-reinforced resin.
[9] A structure having the battery housing according to any one of the above [1] to [8] and a battery cell.
[10] The structure according to the above [9], wherein a mat layer of the inorganic fiber B in the battery housing is arranged on the battery cell side.
[11] The use of the structure according to above [9] or [10] for electric vehicles.
[12] An electric mobility including the structure according to any one of the above [9] to [10].

### Advantageous Effects of Invention

According to the present invention, it is possible to provide a battery housing capable of delaying the spread of fire to an automobile interior member when thermal runaway of a battery occurs and flame is generated, and having excellent flame shielding performance.

### Brief Description of Drawings

Fig. 1 is a conceptual view illustrating a battery housing.
Fig. 2 is a model view indicating a stampable sheet of Example 1.

### Description of Embodiments

Embodiments of the present invention will be described in detail below. However, the following description is an example of the embodiments of the present invention.

### [Battery Housing]

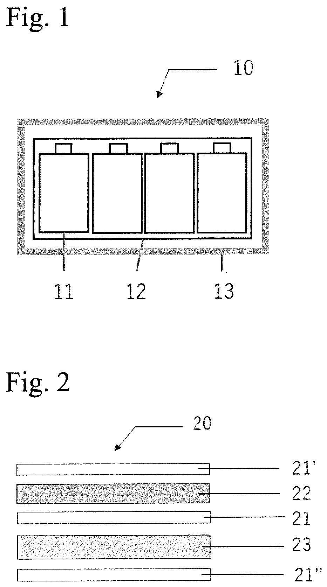

Fig. 1 is a conceptual view showing a structure such as a battery including a battery housing. A structure 10 such as a battery includes, for example, a battery module 11 that is an assembly of battery cells (battery units), a battery pack 12 that is an assembly of battery modules, and a battery housing 13 for housing battery members such as a battery pack.

The battery housing of the present invention is made of a fiber-reinforced resin, and contains, as the fiber, a highly heat-resistant fiber A having a melting temperature or a burn-out temperature of higher than 1000°C in an air atmosphere, and an inorganic fiber B (hereinafter may simply be referred to as "inorganic fiber B") having a melting temperature or a burn-out temperature lower than that of the highly heat-resistant fiber A.

### <Fiber>

The fiber in the fiber-reinforced resin according to the present invention may be an organic fiber or an inorganic fiber. However, an inorganic fiber is preferable from the viewpoint of heat resistance, and examples thereof include glass fiber, rock wool, basalt fiber, alumina fiber, silica alumina fiber, potassium titanate fiber, calcium silicate (wollastonite) fiber, and alkaline earth silicate fiber (biosoluble). These inorganic fibers may be used alone or in combination of two or more kinds thereof.

In the present invention, the fiber includes a highly heat-resistant fiber A with a melting temperature or a burn-out temperature of higher than 1000°C in an air atmosphere. Examples of the highly heat-resistant fiber include alumina fiber, potassium titanate fiber, silica alumina fiber, alkaline earth silicate fiber (biosoluble), and basalt fiber. Of these, alumina fiber is particularly preferred.

The highly heat-resistant fiber can be used alone or in combination of two or more kinds thereof.

Further, the fiber includes, in addition to the above-described highly heat-resistant fiber A, an inorganic fiber B having a melting temperature or a burn-out temperature lower than that of the highly heat-resistant fiber A. By containing two or more types of fibers having different melting temperatures or burn-out temperatures in an air atmosphere, it is possible to prevent the highly heat-resistant fiber A from breaking and to prevent deterioration of functions of the highly heat-resistant fiber A.

The content of the highly heat-resistant fiber A is preferably 1 part by mass or more, more preferably 3 parts by mass or more, and still more preferably 5 parts by mass or more, with respect to 100 parts by mass of the fiber-reinforced resin. The upper limit is preferably 20 parts by mass or less, more preferably 15 parts by mass or less, and even more preferably 10 parts by mass or less. When the content is equal to or more than the above lower limit, sufficient flame shielding performance and rigidity can be obtained, and when the content is equal to or lower than the above upper limit, workability is ensured.

The fiber of the present invention must contain the highly heat-resistant fiber A as described above, and must also contain the inorganic fiber B having a melting temperature or a burn-out temperature lower than that of the highly heat-resistant fiber A.

By mixing the inorganic fiber B with the highly heat-resistant fiber A, it is possible to prevent the highly heat-resistant fiber A from breaking and prevent the deterioration of functions of the highly heat-resistant fiber A. From the above viewpoints, glass fibers are suitable as the inorganic fiber B, and the fiber in the present invention particularly preferably includes alumina fiber and glass fiber.

When the highly heat-resistant fiber A (for example, alumina fiber) and the inorganic fiber B (for example, glass fiber) are contained, the mass ratio to the highly heat-resistant fiber A (inorganic fiber B/highly heat-resistant fiber A) is required to be in the range of more than 1 to 8, and preferably in the range of 2 to 6.

In addition, the highly heat-resistant fiber A, such as alumina fiber, and the inorganic fiber B, such as glass fiber, may be contained in the fiber-reinforced resin, or a mat of the highly heat-resistant fiber A such as alumina fiber and a mat of the inorganic fiber B such as glass fiber, which will be described in detail later, may be laminated and impregnated with a resin to obtain a sheet-shaped product.

The fiber used in the present invention may be used in combination with a sizing agent or a surface treatment agent. Examples of such a sizing agent or surface treatment agent include a compound having a functional group, such as an epoxy compound, a silane compound, and a titanate compound.

The fiber of the present invention includes the highly heat-resistant fiber A and the inorganic fiber B, and at least one kind of the fibers preferably has an average fiber diameter of 3 to 25 µm and preferably has an average fiber length of 5 mm or more. In particular, the average fiber diameter and the average fiber length of the highly heat-resistant fiber A are preferably within the above ranges.

Further, the average fiber length of the inorganic fiber B is preferably greater than the average fiber length of the highly heat-resistant fiber A. With such an embodiment, it is possible to more effectively prevent the highly heat-resistant fiber A from breaking and prevent the deterioration of functions of the highly heat-resistant fiber A.

In addition, the fiber diameter can be measured using an optical microscope or the like, and the average fiber diameter can be obtained, for example, by randomly measuring the fiber diameters of 10 fibers and calculating the average value. In addition, the fiber length can be measured using a ruler, vernier caliper, or the like from an image magnified with a microscope or the like, when necessary. The average fiber length can be obtained, for example, by randomly measuring the fiber lengths of 10 fibers and calculating the average value.

The fiber content in the fiber-reinforced resin of the present invention is preferably 3 to 60% by mass. When the fiber content is 3% by mass or more, the strength, rigidity, and impact resistance of the battery housing can be ensured. On the other hand, when the fiber content is 60% by mass or less, the battery housing can be easily produced and processed. Further, when the fiber content is 60% by mass or less, the specific gravity decreases, and there is an advantage that the effect of weight reduction as a metal substitute is large.

From the above viewpoints, the fiber content in the fiber-reinforced resin is more preferably 10 to 50% by mass, and further preferably 30 to 45% by mass.

The term "fiber" as used herein includes the highly heat-resistant fiber A and the inorganic fiber B described above.

### < Thermoplastic Resin>

Although the resin constituting the fiber-reinforced resin of the present invention is not particularly limited, it can be a thermoplastic resin. The thermoplastic resin is not particularly limited, and examples thereof include polyolefin resins such as polyethylene and polypropylene, polyvinyl chloride, polystyrene, polyvinyl acetate, and polyurethane.

Of these, a polyolefin resin is preferred, and a polypropylene-based resin is particularly preferred, in terms of physical properties, versatility, cost, etc. of the resin.

### (Polypropylene-based Resin)

Examples of the polypropylene-based resin include a propylene homopolymer and a propylene-α-olefin copolymer. Here, the propylene-α-olefin copolymer may be either a random copolymer or a block copolymer.

### << Content of Thermoplastic Resin>>

The content of the thermoplastic resin in the battery housing of the present invention is preferably 20 to 80% by mass. When the content of the thermoplastic resin is 20% by mass or more, the molding workability is sufficient, and the molding of the battery housing becomes easy. On the other hand, when the content of the thermoplastic resin is 80% by mass or less, the content of the inorganic fiber becomes sufficient, and sufficient flame shielding performance can be obtained. From the above viewpoints, the content of the thermoplastic resin in the battery housing is preferably 35 to 70% by mass, and more preferably 40 to 60% by mass.

### < Optional Additive Component>

In the battery housing of the present invention, in addition to the above components, any additive component can be blended for a purpose of imparting other effects, such as further improving the effects of the present invention, within a range that does not significantly impair the effects of the present invention.

Specific examples thereof include a colorant such as a pigment, a light stabilizer such as a hindered amine-based light stabilizer, a UV absorber such as a benzotriazole-based UV absorber, a nucleating agent such as a sorbitol-based nucleating agent, an antioxidant such as a phenol-based and a phosphorus-based antioxidant, an antistatic agent such as a nonionic surfactant, a neutralizing agent such as an inorganic compound, an antibacterial and antifungal agent such as a thiazole-based antibacterial and antifungal agent, a flame retardant such as a halogen compound, a plasticizer, a dispersant such as an organic metal salt-based dispersant, a lubricant such as a fatty acid amide-based lubricant, a metal deactivator such as a nitrogen compound, a polyolefin resin other than the aforementioned polypropylene-based resin, a thermoplastic resin such as a polyamide resin and a polyester resin, and an elastomer such as an olefin-based elastomer and a styrene-based elastomer (rubber component).

These optional additive components may be used in combination of two or more kinds thereof.

As the colorant, for example, an inorganic or organic pigment and the like are effective in imparting and improving colored appearance, attractiveness, texture, commercial value, weather resistance, durability, etc. of the polypropylene-based resin composition and a molded article thereof.

Specific examples of the inorganic pigment include carbon black, such as furnace carbon and ketjen carbon; titanium oxide; iron oxide (red iron oxide, etc.); chromic acid (chrome, etc.); molybdic acid; selenide sulfide; and ferrocyanide. Specific examples of the organic pigment include a sparingly soluble azo lake, a soluble azo lake, an insoluble azo chelate; a condensable azo chelate; an azo pigment such as other azo chelates; a phthalocyanine pigment, such as phthalocyanine blue and phthalocyanine green; a threne-based pigment, such as anthraquinone, perinone, perylene, and thioindigo; a dye lake; a quinacridone-based pigment; a dioxazine-based pigment; and an isoindolinone-based pigment. In addition, an aluminum flake or a pearl pigment can be contained to give a metallic tone or a pearly tone. A dye can also be contained.

A hindered amine compound, a benzotriazole-based, benzophenone-based, or salicylate-based light stabilizer or UV absorber is effective in imparting and improving the weather resistance and durability of the polypropylene-based resin composition and a molded article thereof, and is effective in further improving weather-resistance discoloration properties.

Specific examples of the hindered amine compound include a condensation product of dimethyl succinate and 1-(2-hydroxyethyl)-4-hydroxy-2,2,6,6-tetramethylpiperidine; poly[[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino]]; tetrakis(2,2,6,6-tetramethyl-4-piperidyl)1,2,3,4-butanetetracarboxylate; tetrakis( 1,2,2,6,6-pentamethyl-4-piperidyl)1,2,3,4-butane tetracarboxylate; bis(1,2,2,6,6-pentamethyl-4-piperidyl)sebacate; and bis-2,2,6,6-tetramethyl-4-piperidyl sebacate. Examples of a benzotriazole-based one include 2-(2'-hydroxy-3',5'-di-t-butylphenyl)-5-chlorobenzotriazole; and 2-(2'-hydroxy-3'-t-butyl-5'-methylphenyl)-5-chlorobenzotriazole. Examples of a benzophenone-based one include 2-hydroxy-4-methoxy benzophenone; and 2-hydroxy-4-n-octoxybenzophenone. Examples of a salicylate-based one include 4-t-butylphenyl salicylate; and 2,4-di-t-butylphenyl 3',5'-di-t-butyl-4'-hydroxybenzoate.

Here, a method of using the light stabilizer and the UV absorber in combination is preferable because it has a large effect of improving weather resistance, durability, weather-resistance discoloration properties, and the like.

As an antioxidant, for example, a phenol-based, phosphorus-based or sulfur-based antioxidant is effective in imparting and improving heat resistance, processing stability, heat aging resistance, and the like of the polypropylene-based resin composition and a molded article thereof.

Also, as an antistatic agent, for example, a nonionic or cationic antistatic agent is effective in imparting and improving the antistatic property of the polypropylene-based resin composition and a molded article thereof.

Examples of the olefin-based elastomer include an ethylene/α-olefin copolymer elastomer, such as an ethylene/propylene copolymer elastomer (EPR), an ethylene/butene copolymer elastomer (EBR), an ethylene/hexene copolymer elastomer (EHR), and an ethylene/octene copolymer elastomer (EOR); an ethylene/α-olefin/diene terpolymer elastomer, such as an ethylene/propylene/ethylidene norbornene copolymer, an ethylene/propylene/butadiene copolymer, and an ethylene/propylene/isoprene copolymer, and a styrene/butadiene/styrene triblock copolymer elastomer (SBS).

Examples of the styrene-based elastomer include a styrene-based elastomer, such as a styrene/isoprene/styrene triblock copolymer elastomer (SIS), a styrene-ethylene/butylene copolymer elastomer (SEB), a styrene-ethylene/propylene copolymer elastomer (SEP), a styrene-ethylene/butylene-styrene copolymer elastomer (SEBS), a styrene-ethylene/butylene-ethylene copolymer elastomer (SEBC), a hydrogenated styrene/butadiene elastomer (HSBR), a styrene-ethylene/propylene-styrene copolymer elastomer (SEPS), a styrene-ethylene/ethylene/propylene-styrene copolymer elastomer (SEEPS), a styrenebutadiene/butylene-styrene copolymer elastomer (SBBS), a partially hydrogenated styreneisoprene-styrene copolymer elastomer, and a partially hydrogenated styreneisoprene/butadiene-styrene copolymer elastomer, and further a hydrogenated polymer-based elastomer, such as an ethylene-ethylene/butylene-ethylene copolymer elastomer (CEBC).

Of these, it is preferable that an ethylene/octene copolymer elastomer (EOR) and/or an ethylene/butene copolymer elastomer (EBR) is used from the viewpoint that the polypropylene-based resin composition of the present invention and a molded article thereof tend to be easily imparted with appropriate flexibility and have excellent impact resistance.

### <Structure of Battery Housing>

Although the thickness of the battery housing of the present invention is not particularly limited, it is preferably 0.5 mm or more, more preferably 1.0 mm or more, and even more preferably 2.0 mm or more. When the thickness of the battery housing is equal to or more than the above lower limit, it is preferable from the viewpoints of moldability, mechanical strength, and flame shielding performance. Also, the thickness of the battery housing is preferably 10 mm or less, more preferably 8 mm or less, and particularly preferably 6 mm or less. It is preferable that the thickness is equal to or less than the above upper limit, because it is easy to adapt to the size of the space in which it is arranged, as well as from the viewpoint of weight reduction and moldability.

### <Production Method of Battery Housing>

Various methods can be used as the method for producing the battery housing of the present invention. However, press molding is preferable from the viewpoint of productivity. For press molding, it is preferable to prepare a stampable sheet made of the fiber-reinforced resin of the present invention, stack a plurality of the stampable sheets, and press mold the stampable sheets. It is preferable that the stampable sheet containing a highly heat-resistant fiber is sandwiched between other stampable sheets from both sides such that the highly heat-resistant fiber can easily flow over the entire sheet. When stacking a plurality of stampable sheets containing highly heat-resistant fibers, it is preferable to stack the stampable sheets such that the stampable sheets are centered as much as possible.

### (Production of Stampable Sheet)

The stampable sheet is preferably produced by impregnating a mat made of fibers with a thermoplastic resin composition. Examples of impregnation methods include a method of applying a thermoplastic resin composition to a fiber mat such as an inorganic fiber mat, and a method of preparing a sheet of a thermoplastic resin composition, laminating the sheet on a fiber mat, and heating and melting to impregnate the sheet.

In the present invention, from the viewpoint of surface smoothness of the stampable sheet, a method of laminating a thermoplastic resin sheet on a fiber mat and heating and melting is preferred. In particular, it can be obtained by laminating a fiber mat between two thermoplastic resin sheets, then heating and pressurizing the laminate, and then cooling and solidifying the laminate.

### <<Thermoplastic Resin Composition>>

The thermoplastic resin composition is a resin composition containing a thermoplastic resin and optional additives, etc., excluding the fiber. As a production method, a conventionally known method can be used, and the composition can be produced by blending, mixing, and melt-kneading the above components.

Mixing is performed using a mixer such as a tumbler, a V blender, and a ribbon blender. Melt kneading is performed by melt-kneading and granulating using equipment such as a single screw extruder, a twin screw extruder, a Banbury mixer, a roll mixer, a Brabender plastograph, and a kneader.

### (Fiber Mat)

The form of the fibers used in the stampable sheet production method is not particularly limited, and various forms can be used. However, those in the form of a mat or sheet are preferred.

More specifically, in the present invention, it is preferable to use a mat formed of highly heat-resistant fibers typified by alumina fibers (hereinafter referred to as "highly heat-resistant fiber mat"), and in addition, it is preferable to use a mat formed of glass fibers (hereinafter referred to as "glass fiber mat").

The basis weight (mass per unit area) of the fiber mat is not particularly limited and is appropriately determined according to the application. However, it is preferably 300 g/m² or more, more preferably greater than 500 g/m², further preferably greater than 700 g/m², still more preferably greater than 900 g/m², and particularly preferably greater than 1000 g/m². Moreover, the basis weight of the fiber mat is not particularly limited; however, it is preferably 5000 g/m² or less, more preferably 4500 g/m² or less, still more preferably 4000 g/m² or less, and particularly preferably 3500 g/m² or less.

Although the thickness of the fiber mat according to the present invention is not particularly limited, it is preferably 4 mm or more, more preferably 5 mm or more, and even more preferably 6 mm or more. Also, the thickness of the fiber mat is preferably 40 mm or less, more preferably 35 mm or less, and particularly preferably 30 mm or less.

The basis weight per unit area or the thickness of the fiber mat can be set within the above range by adjusting the amount of fiber per unit area when fiber aggregates constituting the fiber mat are laminated using a folding device. In addition, the fiber mat of the present invention may have a structure in which a plurality of fiber mats are bonded together or a single structure. However, a single structure is preferred from the viewpoint of handling properties and peel strength at a bonding interface.

### (Glass Fiber Mat)

Examples of the form of the glass fiber mat used in the present invention include felt and blanket processed with short glass fiber cotton, a chopped strand mat obtained by processing continuous glass fiber, a swirl (spiral) mat of continuous glass fiber, and a unidirectional aligned mat. Of these, a glass fiber mat obtained by needle-punching a swirl (spiral) mat of continuous glass fiber is particularly preferable because the strength and impact resistance of the stampable sheet are excellent.

### (Highly Heat-resistant Fiber Mat)

The highly heat-resistant fiber mat according to the present invention is a mat that is composed of highly heat-resistant fibers and has undergone a needling treatment. Therefore, the mat has needle marks formed by the needling treatment. That is, when a needling treatment is performed where a needle with a barb is thrusted into and pulled out from a highly heat-resistant fiber assembly, at least a part of the fibers are extended substantially in a thickness direction by the needle at a location where the needle is thrusted and pulled out. As a result, needle marks are formed on the surface of the highly heat-resistant fiber mat. On the other hand, bundles of highly heat-resistant fibers formed substantially in the thickness direction existing inside the highly heat-resistant fiber mat that has undergone the needling treatment are called longitudinal filaments.

Among the longitudinal filaments that exist inside the highly heat-resistant fiber mat, the longitudinal filaments that have a specific diameter and length are effective longitudinal filaments. Specifically, when a peeling test is performed, among all longitudinal filaments protruding from both peeling surfaces (one peeling surface and the other peeling surface) per unit area (50 mm × 50 mm), a longitudinal filament having a diameter of 100 µm or more and a protruding length of 2 mm or more is an effective longitudinal filament. The needling treatment is used to adjust the bulk density, peel strength, surface pressure (surface pressure after high temperature cycle), and repulsive force durability (surface pressure retention rate after high temperature cycle) of the alumina fiber mat by forming longitudinal filaments. In other words, an effective longitudinal filament means, of the longitudinal filaments that exist substantially in the thickness direction inside the highly heat-resistant fiber mat, one that has a diameter and length that can function as a longitudinal filament. Also, the volume of the effective longitudinal filaments means the volume of the area protruding from the peeling surface.

In the present invention, it is preferable to use an alumina fiber mat.

In a method of laminating a thermoplastic resin sheet on a fiber mat and heating and melting, appropriate conditions may be selected according to the types of thermoplastic resins. Preferred conditions where polypropylene is used are described below.

The heating temperature is preferably 170 to 300°C. When the heating temperature is 170°C or higher, the polypropylene-based resin has sufficient fluidity, the fiber mat can be sufficiently impregnated with the polypropylene composition, and a suitable stampable sheet can be obtained. On the other hand, when the heating temperature is 300°C or less, the polypropylene composition will not deteriorate.

Furthermore, the applied pressure is preferably 0.1 to 1 MPa. When the applied pressure is 0.1 MPa or more, the fiber mat can be sufficiently impregnated with the polypropylene composition, and a suitable stampable sheet can be obtained. On the other hand, when the pressure is 1 MPa or less, the polypropylene composition will flow and burrs will not occur.

In addition, the cooling temperature is not particularly limited as long as it is equal to or lower than the freezing point of the thermoplastic resin in the polypropylene composition. However, when the cooling temperature is 80°C or lower, the obtained stampable sheet is not deformed when taken out. From the above point of view, the cooling temperature is preferably room temperature to 80°C.

Methods for obtaining a stampable sheet by heating, pressurizing, and cooling the laminate include a method of press-molding the laminate in a mold equipped with a heating device, and a lamination processing of passing the laminate between two pairs of rollers equipped with a heating device to heat and pressurize the laminate. In particular, lamination processing is preferable because it allows continuous production, resulting in good productivity.

### <Thickness of Stampable Sheet>

The thickness of the stampable sheet of the present invention is usually 1 to 10 mm, preferably 2 to 5 mm. When the thickness of the stampable sheet is 1 mm or more, it is easy to produce the stampable sheet. On the other hand, when the thickness of the stampable sheet is 10 mm or less, in the case where the stampable sheet is processed by stamping molding or the like, it is unnecessary to preheat for a long time, and good moldability can be obtained.

### <Thermosetting Resin>

Although the resin constituting the fiber-reinforced resin of the present invention is not particularly limited, it can be a thermosetting resin. The thermosetting resin is not particularly limited, and examples thereof include a vinyl urethane resin, an unsaturated polyester resin, an acrylic resin, an epoxy resin, a phenol resin, a melamine resin, and a furan resin. In addition, these thermosetting resins may be used alone or in combination of two or more kinds thereof. Of these, a vinyl urethane resin, an epoxy resin, and a phenol resin are preferred from the viewpoints of physical properties, versatility, cost, etc. of the resin.

In the present invention, the thermosetting resin and the fiber can be composited and used as a fiber-reinforced composite material. For the fiber-reinforced composite material, a prepreg in which a reinforcing fiber base material containing continuous fibers is impregnated with a thermosetting resin composition, or a sheet molding compound (SMC) in which a reinforcing fiber base material containing short fibers is impregnated with a thermosetting resin composition is used.

Compression molding of fiber-reinforced composite materials is widely used as a method of producing fiber-reinforced composite material molded articles.

### <<Content of Thermosetting Resin>>

The content of the thermosetting resin in the battery housing of the present invention is preferably 20 to 80% by mass. When the content of the thermosetting resin is 20% by mass or more, the molding workability is sufficient, and the molding of the battery housing becomes easy. On the other hand, when the content of the thermosetting resin is 80% by mass or less, the content of the inorganic fiber becomes sufficient, and sufficient flame shielding performance can be obtained. From the above viewpoints, the content of the thermosetting resin in the battery housing is preferably 35 to 70% by mass, and more preferably 40 to 60% by mass.

### <Method for Producing Battery Housing Using Thermosetting Resin>

Although various methods can be used as a method for producing the battery housing of the present invention using a thermosetting resin, press molding is preferable from the viewpoint of productivity. At the time of press molding, a prepreg in which a reinforcing fiber base material containing continuous fibers is impregnated with a thermosetting resin composition, or a sheet molding compound (SMC) in which a reinforcing fiber base material containing short fibers is impregnated with a thermosetting resin composition is used.

### [Structure]

The structure of the present invention has a battery housing and a battery cell. The battery housing of the present invention is as described in detail above.

A battery is preferable as the structure in the present invention, and the battery is not particularly limited. Examples thereof include a secondary battery, such as a lithium ion battery, a nickel-hydrogen battery, a lithium-sulfur battery, a nickel-cadmium battery, a nickel-iron battery, a nickel-zinc battery, a sodium-sulfur battery, a lead-acid battery, and an air battery. Of these batteries, a lithium ion battery is preferred, and in particular, the battery housing of the present invention is suitably used for suppressing thermal runaway of the lithium ion battery. That is, the battery housing of the present invention is preferably a battery housing for a lithium ion battery.

Further, in the structure of the present invention, it is preferable that a mat layer of the inorganic fiber B is arranged on the battery cell side in the battery housing. With such an embodiment, it is possible to suppress the thermal runaway of the battery step by step, specifically suppress a blast generated at the time of thermal runaway by the inorganic fiber B and suppress a high temperature flame by the highly heat-resistant fiber A, which is advantageous.

### [Electric Mobility]

"Electric mobility" in the present invention refers to transportation equipment such as vehicles, ships, and airplanes that operate using electricity as an energy source. Vehicles include not only electric vehicles (EV) but also hybrid vehicles.

A structure such as a battery having a battery housing according to the present invention and a battery cell as described above is highly safe and is very useful for electric mobility using a battery module with high energy density in order to be capable of extending driving distance. It is particularly useful for electric vehicles.

### Examples

The present invention will be described in detail below using Examples; however, the present invention is not limited to these Examples.

### (Evaluation Method)

### Evaluation of flame shielding performance

The stampable sheets prepared in each Example and Comparative Example are fixed in a state where 150 mm × 150 mm of the stampable sheet is exposed such that a flame can be applied to the same place. Using an acetylene torch burner with a diameter of 1.2 mm (WT-01, manufactured by Sakaguchi Seisakusho), a flame was applied with a distance between the sample and the burner adjusted to 145 mm under conditions of 0.15 MPa of oxygen and 0.001 MPa of acetylene such that the sample surface temperature became 1200°C. The flame was applied for 5 minutes, and the flame shielding performance was evaluated by visually confirming whether or not the flame penetrated. Evaluation criteria are as follows.
A (Excellent): The flame did not penetrate and the back surface temperature of the flame contact surface was lower than 350°C.
B (Good): The flame did not penetrate; however, the back surface temperature of the flame contact surface was 350°C or higher.
C (Bad): The flame penetrated.

### (Materials Used)

### 1. Polypropylene-based resin (component A)

"Novatec PP" (melt flow rate: 60 g/10 minutes) manufactured by Japan Polypropylene Corporation

### 2. Flame retardant

A phosphorus-based flame retardant composition (manufactured by ADEKA Corporation, ADEKA STAB FP-2200, containing, with respect to the total mass of the phosphorus-based flame retardant composition, 50 to 60% by mass of piperazine pyrophosphate, 35 to 45% by mass of melamine pyrophosphate, and 3 to 6% by mass of zinc oxide)

### 3. Dispersant

α-olefin/maleic anhydride copolymer (manufactured by Mitsubishi Chemical Corporation, DIACARNA 30M, weight average molecular weight 7,800).

### 4. Glass fiber mat

A glass fiber mat obtained by needle-punching a swirl (spiral) mat (basis weight: 880 g/m²) made from continuous roving glass fibers (fiber diameter: 23 µm) was used.

### 5. Alumina fiber mat

A mat (weight per unit area: 900 g/m²) made from commercially available crystalline alumina fiber ("MAFTEC" (registered trademark) manufactured by Mitsubishi Chemical Corporation) was used.

### Preparation Example 1 (Preparation of Polypropylene-based Resin Composition)

The polypropylene-based resin, a flame retardant, and a dispersant were melt-kneaded (230°C) in the proportions shown in Table 1 to prepare pellets of a polypropylene-based resin composition (hereinafter referred to as "PP composition 1").

### Example 1

A description will be given below with reference to Fig. 2.

The pellets of the PP composition 1 granulated in Preparation Example 1 were placed in an extruder, melted, and then extruded and molded into a sheet shape. At the same time, the extruded sheet-shaped PP (21, 21' and 21" in Fig. 2), a glass fiber mat 23, and an alumina fiber mat 22 were laminated by supplying the PP as an outermost layer and supplying the glass fiber 23 and the alumina fiber mat 22 therebetween such that they were respectively in mass ratios of a and b in Table 1. Thereafter, by heating and pressurizing at 230°C for 4 minutes while applying a pressure of 0.3 MPa using a laminator, followed by cooling and solidifying, a stampable sheet (thickness: 3.8 mm) was obtained.

### Molding of Housing Cover

Two stampable sheets a and one stampable sheet b obtained above were used and stacked such that b was sandwich by a's from both sides, and the materials were preheated in a far-infrared heating furnace (set temperature: 270 to 300°C) for 4 minutes to a temperature of 210°C.

Then, the stampable sheets were held for 30 seconds while applying a pressure of 150 kg/cm² in a press machine equipped with a mold, followed by cooling and solidification to obtain a box-shaped molded article (thickness: 3.0 mm). The results of evaluation by the above method are shown in Table 2. In each of Examples 1 to 3, and Comparative Example 1, the stampable sheets a to f were prepared such that, in addition to the components shown in Tables 1 and 2, optional additive components were added so that the total was 100% by mass.

### Example 2

A molded article (thickness: 3.0 mm) was obtained in the same manner as in Example 1, except that in the method for producing a stampable sheet of Example 1, the contents of the polypropylene resin, the flame retardant, and the dispersant in the resin composition were changed as c and d shown in Table 1, and the housing cover was molded with the stampable sheets stacked such that d was sandwiched by c's from both sides, and the mass ratio was changed to that shown in Table 2. The results of evaluation by the above method are shown in Table 2.

### Example 3

A molded article (thickness: 3.0 mm) was obtained in the same manner as in Example 1, except that in the method for producing a stampable sheet of Example 1, the resin composition did not contain a flame retardant and a dispersant, the contents of the glass fiber and the alumina fiber were changed as c and e shown in Table 1, and the housing cover was molded with the stampable sheets stacked such that e was sandwiched by c's from both sides, and the mass ratio was changed to that shown in Table 2. The results of evaluation by the above method are shown in Table 1.

### Comparative Example 1

A stampable sheet was obtained in the same manner as in Example 1, except that in Example 1, pellets and chopped carbon fibers were kneaded in a kneader in the proportions of f in Table 1, and the resulting compound was used to form a sheet without using an alumina fiber mat. Thereafter, a molded article (thickness: 3.0 mm) was obtained in the same manner as in Example 1 except that the housing cover was molded with three f's stacked, and the mass ratio was changed to that shown in Table 2. The results of evaluation by the above method are shown in Table 2.

**Table 1**

| Stampable sheet | | a | b | c | d | e | f |
|---|---|---|---|---|---|---|---|
| Resin composition (% by mass) | Polypropylene resin | 42.0 | 42.0 | 57.5 | 54.7 | 57.4 | 61.6 |
| | Flame retardant | 18.2 | 18.0 | 0.0 | 3.2 | 0.0 | 0.0 |
| | Dispersant | 0.5 | 0.6 | 0.0 | 0.3 | 0.0 | 0.0 |
| Fiber mat (% by mass) | Glass fiber | 36.1 | 18.0 | 39.5 | 19.4 | 19.7 | 21.1 |
| | Alumina fiber | 0.0 | 18.2 | 0.0 | 19.6 | 19.9 | 0.0 |
| | Carbon fiber | 0.0 | 0.0 | 0.0 | 0.0 | 0.0 | 14.1 |

**Table 2**

| Housing cover | | Ex. 1 | Ex. 2 | Ex. 3 | Comp. Ex. 1 |
|---|---|---|---|---|---|
| Stampable sheet used | | a × 2 | c × 2 | c× 2 | f × 3 |
| | | b × 1 | d × 1 | e × 1 | |
| Resin composition (% by mass) | Polypropylene resin | 42.0 | 56.6 | 57.5 | 61.6 |
| | Flame retardant | 18.1 | 1.1 | 0.0 | 0.0 |
| | Dispersant | 0.5 | 0.1 | 0.0 | 0.0 |
| | Dispersant ratio* | 2.8 | 9.1 | - | - |
| Fiber mat (% by mass) | Glass fiber | 30.1 | 32.8 | 32.9 | 21.1 |
| | Alumina fiber | 6.1 | 6.5 | 6.6 | 0.0 |
| | Carbon fiber | 0.0 | 0.0 | 0.0 | 14.1 |
| Evaluation result | Flame shielding performance | A | B | B | C |

| | | | | | |
|---|---|---|---|---|---|
| *The dispersant ratio is the content (parts by mass) of the dispersant with respect to 100 parts by mass of the flame retardant. | | | | | |

Thus, it can be seen that the battery housing of the present invention containing highly heat-resistant fibers has excellent flame shielding performance. In addition, the battery housing of the present invention is lightweight because the main component is resin.

### Industrial Applicability

The battery housing of the present invention has excellent flame shielding performance, and since resin is the main component, it has excellent workability. Moreover, since it is lightweight, a structure using the battery housing of the present invention is useful as an electric mobility.

### Reference Signs List

10: Structure (battery)
11: Battery module
12: Battery pack
13: Battery housing
20: Stampable sheet
21: Polypropylene sheet
21': Polypropylene sheet
21": Polypropylene sheet
22: Glass fiber mat
23: Alumina fiber mat

## Claims

1. A battery housing made of a fiber-reinforced resin, comprising, as the fiber, a highly heat-resistant fiber A having a melting temperature or a burn-out temperature of higher than 1000°C in an air atmosphere, and an inorganic fiber B having a melting temperature or a burn-out temperature lower than that of the highly heat-resistant fiber A, wherein a mass ratio of the inorganic fiber B to the highly heat-resistant fiber A (B/A) is in a range of more than 1 to 8.

2. The battery housing according to claim 1, wherein the mass ratio of the inorganic fiber B to the highly heat-resistant fiber A (B/A) is in a range of 2 to 6.

3. The battery housing according to claim 1 or 2, wherein the highly heat-resistant fiber A has an average fiber diameter of 3 to 25 µm and an average fiber length of 5 mm or more.

4. The battery housing according to any one of claims 1 to 3, wherein the inorganic fiber B has an average fiber length greater than the average fiber length of the highly heat-resistant fiber A.

5. The battery housing according to any one of claims 1 to 4, wherein the highly heat-resistant fiber A has a content of 1 part by mass or more with respect to 100 parts by mass of the fiber-reinforced resin.

6. The battery housing according to any one of claims 1 to 5, wherein the inorganic fiber B contains a glass fiber.

7. The battery housing according to any one of claims 1 to 6, wherein the highly heat-resistant fiber A is an alumina fiber.

8. The battery housing according to any one of claims 1 to 7, which is formed by shape forming a stampable sheet made of the fiber-reinforced resin.

9. A structure comprising the battery housing according to any one of claims 1 to 8 and a battery cell.

10. The structure according to claim 9, wherein a mat layer of the inorganic fiber B in the battery housing is arranged on the battery cell side.

11. The use of the structure according to claims 9 or 10 for electric vehicles.

12. An electric mobility comprising the structure according to any one of claims 9 to 11.

## Patentansprüche

1. Ein Batteriegehäuse aus einem faserverstärkten Harz, umfassend als die Faser eine hochwärmebeständige Faser A mit einer Schmelztemperatur oder einer Ausbrenntemperatur oberhalb 1000°C in einer Luftatmosphäre und eine anorganische Faser B mit einer Schmelztemperatur oder einer Ausbrenntemperatur unterhalb derjenigen der hochwärmebeständigen Faser A, wobei ein Massenverhältnis der anorganischen Faser B zu der hochwärmebeständigen Faser A (B/A) in einem Bereich von mehr als 1 bis 8 liegt.

2. Das Batteriegehäuse nach Anspruch 1, wobei das Massenverhältnis der anorganischen Faser B zu der hochwärmebeständigen Faser A (B/A) in einem Bereich von 2 bis 6 liegt.

3. Das Batteriegehäuse nach Anspruch 1 oder 2, wobei die hochwärmebeständige Faser A einen mittleren Faserdurchmesser von 3 bis 25 µm und eine mittlere Faserlänge von 5 mm oder mehr aufweist.

4. Das Batteriegehäuse nach einem der Ansprüche 1 bis 3, wobei die anorganische Faser B eine mittlere Faserlänge aufweist, die größer ist als die mittlere Faserlänge der hochwärmebeständigen Faser A.

5. Das Batteriegehäuse nach einem der Ansprüche 1 bis 4, wobei die hochwärmebeständige Faser A einen Gehalt von 1 Massenteil oder mehr, bezogen auf 100 Massenteile des faserverstärkten Harzes, aufweist.

6. Das Batteriegehäuse nach einem der Ansprüche 1 bis 5, wobei die anorganische Faser B eine Glasfaser enthält.

7. Das Batteriegehäuse nach einem der Ansprüche 1 bis 6, wobei die hochwärmebeständige Faser A eine Aluminiumoxidfaser ist.

8. Das Batteriegehäuse nach einem der Ansprüche 1 bis 7, welches durch Formgebung einer stanzbaren Platte aus dem faserverstärkten Harz gebildet ist.

9. Eine Struktur, umfassend das Batteriegehäuse nach einem der Ansprüche 1 bis 8 und eine Batteriezelle.

10. Die Struktur nach Anspruch 9, wobei eine Mattenschicht aus der anorganischen Faser B in dem Batteriegehäuse auf der Batteriezellenseite angeordnet ist.

11. Die Verwendung der Struktur nach den Ansprüchen 9 oder 10 für Elektrofahrzeuge.

12. Eine Elektromobilität, umfassend die Struktur nach einem der Ansprüche 9 bis 11.

## Revendications

1. Boîtier de batterie fait en une résine renforcée par des fibres, comprenant, en tant que fibres, des fibres fortement résistantes à la chaleur A ayant un point de fusion ou une température de combustion supérieur à 1000 °C dans une atmosphère d'air, et des fibres inorganiques B ayant un point de fusion ou une température de combustion inférieur à celui des fibres fortement résistantes à la chaleur A, dans lequel le rapport en masse des fibres inorganiques B aux fibres fortement résistantes à la chaleur A (B/A) est situé dans la plage allant de plus de 1 à 8.

2. Boîtier de batterie selon la revendication 1, dans lequel le rapport en masse des fibres inorganiques B aux fibres fortement résistantes à la chaleur A (B/A) est situé dans la plage allant de 2 à 6.

3. Boîtier de batterie selon la revendication 1 ou 2, dans lequel les fibres fortement résistantes à la chaleur A ont un diamètre de fibre moyen de 3 à 25 µm et une longueur de fibre moyenne de 5 mm ou plus.

4. Boîtier de batterie selon l'une quelconque des revendications 1 à 3, dans lequel les fibres inorganiques B ont une longueur de fibre moyenne supérieure à la longueur de fibre moyenne des fibres fortement résistantes à la chaleur A.

5. Boîtier de batterie selon l'une quelconque des revendications 1 à 4, dans lequel la teneur en les fibres fortement résistantes à la chaleur A est de 1 partie en masse ou plus pour 100 parties en masse de la résine renforcée par des fibres.

6. Boîtier de batterie selon l'une quelconque des revendications 1 à 5, dans lequel les fibres inorganiques B contiennent des fibres de verre.

7. Boîtier de batterie selon l'une quelconque des revendications 1 à 6, dans lequel les fibres fortement résistantes à la chaleur A sont des fibres d'alumine.

8. Boîtier de batterie selon l'une quelconque des revendications 1 à 7, qui est formé par façonnage d'une tôle estampable faite de la résine renforcée par des fibres.

9. Structure comprenant le boîtier de batterie de l'une quelconque des revendications 1 à 8 et une cellule de batterie.

10. Structure selon la revendication 9, dans laquelle une couche de mat des fibres inorganiques B dans le boîtier de batterie est disposée du côté cellule de batterie.

11. Utilisation de la structure de la revendication 9 ou 10 pour des véhicules électriques.

12. Dispositif de mobilité électrique comprenant la structure de l'une quelconque des revendications 9 à 11.
